# EUROPÄISCHE PATENTANMELDUNG

(11) **EP 0 729 929 A2**
(43) Veröffentlichungstag der Anmeldung: **04.09.1996**
(21) Anmeldenummer: 96103021.0
(22) Anmeldetag: 29.02.1996
(51) Int. Cl.: C05F 17/00, C05F 9/04

(54) **Verfahren zur Herstellung eines Komposts unter Verwendung keratinhaltiger Abfälle**

(30) Priorität: 02.03.1995 DE 19507204
(71) Anmelder: Asam, Erich, D-83684 Tegernsee (DE)
(72) Erfinder: Timrott, Kurt, 27337 Blender/Varste (DE); Bürger, Horst, Dr., 51143 Köln (DE)
(74) Vertreter: Sasse, Volker, Dipl.-Ing.

(57) **Zusammenfassung**

Ein Verfahren zur Verwertung keratinhaltiger Abfälle besteht darin, daß den Abfällen Obsttrester bzw. frischer Obsttresterkompost zugemischt wird. Das Gemisch wird mit Wasser oder einem Granulierhilfsmittel versetzt und anschließend aerob kompostiert.

## Beschreibung

Die Erfindung betrifft ein Verfahren gemäß dem Oberbegriff des Patentanspruchs 1.

Keratine zählen zu den Gerüsteiweißen, die überaus stabil sind, sie besitzen einen sehr hohen Anteil der Aminosäure Cystein, die durch die Ausbildung von Disulfidbrücken zwischen den Peptidketten eine Stabilisierung der Proteine bewirkt. Keratine sind in Wasser, Säuren und Laugen bei Raumtemperatur unlöslich und werden auch durch die meisten eiweißspaltenden Enzyme nicht angegriffen. Sie kommen im menschlichen bzw. tierischen Organismus insbesondere in der Hornhaut, Haaren, Federn, Nägeln, Klauen, Hufen, Hörnern und Geweihen vor. Sie fallen insbesondere in Schlachthöfen und Gerbereien in großen Mengen als Abfallstoffe an. Aufgrund ihres hohen Anteils von bis zu 14 % Stickstoff in der Trockensubstanz ist die Verwertung von Keratinen als Stickstoffträger zur Pflanzenernährung von besonderem Interesse. Ein direkter Einsatz größerer Keratinmengen in der Landwirtschaft ist aufgrund der dann eintretenden anaeroben Rotteprozesse und der dadurch bedingten Geruchsbelästigung ausgeschlossen. Deshalb ist eine Kompostierung der Abfälle vor ihrer Ausbringung erforderlich.

Ein Verfahren zum Kompostieren keratinhaltiger Abfälle ist aus der DE-PS 39 04 820 bekannt. Dabei werden Federabfälle durch Zumischung von Kohlenstoffträgern derart aufbereitet, daß eine aerobe Verrottung der Federabfälle durchführbar ist. Die Kohlenstoffträger wie Rindenmulch, Sägespäne oder Stroh dienen dabei den Mikroorganismen als Kohlenstoff- und Energielieferanten. Die vorgeschlagenen Kohlenstoffträger haben jedoch den Nachteil, daß der Kohlenstoff größtenteils in Form von Zellulose in sehr fester und damit energiearmer Bindungsform vorliegt. Die Mikroorganismen können daher den Kohlenstoff nur schlecht verwerten, was sehr lange Rottezeiten zur Folge hat. Außerdem besteht die Gefahr, daß der aerobe Rotteprozeß zusammenbricht und in eine anaerobe Rotte übergeht. In diesem Fall entsteht ein penetranter Verwesungsgeruch, was aus hygienischen Gründen vermieden werden muß.

Aufgabe der Erfindung ist es, das eingangs geschilderte Verfahren dahingehend zu verbessern, daß eine sichere und beschleunigte Kompostierung keratinhaltiger Abfälle ermöglicht wird.

Diese Aufgabe wird erfindungsgemäß mit den im kennzeichnenden Teil des Patentanspruchs 1 angegebenen Verfahrensschritten gelöst..

Die Zugabe von Obsttrester, also den Preßrückständen von Obst oder von daraus gewonnenen, vorzugsweise frischen Komposten zu den keratinhaltigen Abfällen, beschleunigt überraschenderweise den Rotteprozeß erheblich. Der Grund dafür liegt darin, daß im Obsttrester der Kohlenstoff in nennenswerten Anteilen in Form von Zucker, Stärke und Pektinen gebunden ist. In diesen Verbindungen ist der Kohlenstoff erheblich schwächer gebunden als in Zellulose. Die Mikroorganismen, welche den Abbau der Keratine besorgen, können den Kohlenstoff aus diesen Substanzen wesentlich leichter abbauen als aus Zellulose. Dies fördert das Wachstum und damit die Abbauleistung der Mikroorganismen. Die Verrottung erfolgt daher sehr rasch, so daß anaerobe Rotteprozesse zuverlässig unterbunden sind. Darüber hinaus fördert die Zugabe von Wasser bzw. eines vorzugsweise wasserhaltigen Granulierhilfsmittels das Wachstum und damit die Aktivität der Mikroorganismen.

Die Verwendung von Traubentrester gemäß Anspruch 2 ist besonders vorteilhaft, da der hohe Zuckergehalt des Traubentresters einen besonders schnellen Abbau der Keratine durch Mikroorganismen bewirkt. Durch den raschen Abbau der energiereichen Zucker-Verbindungen erfolgt eine ständige Freisetzung von Kohlendioxyd aus der Veratmung. Dies reduziert das C:N-Verhältnis, was den Rotteprozeß wiederum beschleunigt. Da Traubentrester eine klebrige Substanz ist, wirkt dieser gleichzeitig als Granulierhilfsmittel. Bei der Vermischung des Traubentresters mit zerkleinerten Keratinabfällen entsteht eine Substanz mit extrem großer fraktalartiger Oberfläche. Diese Oberfläche ist wichtig für den Gasaustausch, da bei der aeroben Verrottung ständig Sauerstoff zugeführt und Kohlendioxyd abgeführt werden muß. Vorzugsweise beträgt der Anteil an Traubentrester an der Gesamtmenge des Obsttresters mindestens 50 Gewichtsprozent.

Für einen günstigen Abbau der Keratine durch Mikroorganismen sollte das C:N-Verhältnis der Rottemasse im Bereich zwischen 3:1 und 7:1 vorzugsweise in der Nähe von 5:1 liegen. Dies wird erfindungsgemäß mit dem in Anspruch 3 angegebenen Bereich des Gewichtsverhältnisses zwischen den Kohlenstoffträgern und den keratinhaltigen Abfällen erreicht. Der Keratinabbau erfolgt optimal, wenn dieses Gewichtsverhältnis im Bereich zwischen 1:1,5 und 1,5 : 1 liegt.

Um einen optimalen Gasaustausch für die aerobe Verrottung zu gewährleisten, ist es gemäß Anspruch 4 günstig, die Rottemasse vor der Kompostierung zu granulieren. Ein Granulat besitzt gegenüber einer homogenen Masse eine wesentlich vergrößerte Oberfläche, die den Gasaustausch erleichtert. Der Sauerstoff kann bis zum Zentrum der Rottemasse vordringen, so daß die Kompostierung homogen im gesamten Volumen erfolgt. Außerdem verhindert eine Granulierung zuverlässig die Entmischung von Stoffen unterschiedlicher Dichte.

Die Granulierung der Rottemasse erfolgt vorteilhaft durch Zusetzen eines Granulierhilfsmittels. Die im Anspruch 5 genannten Substanzen haben sich als im erfindungsgemäßen Verfahren als besonders vorteilhaft einsetzbare Granulierhilfsmittel herausgestellt. Als Leim wird insbesondere Kauritleim eingesetzt. Wahrend der Verrottung wirken diese Granulierhilfsmittel gleichzeitig als Kohlenstoffträger und fordern damit den Rotteprozeß.

Eine Zerkleinerung der keratinhaltigen Abfälle gemäß Anspruch 6 gestattet den Mikroorganismen ein leichteres Eindringen in die Keratinsubstanz. Die Rottemasse läßt sich nach dem Zerkleinern der Abfälle homogener mischen. Insgesamt beschleunigt dies den Rotteprozeß.

Zur Durchführung des erfindungsgemäßen Verfahrens hat sich eine Vorrichtung, bestehend aus einem von mit Öffnungen versehenen Begrenzungswänden gebildeten Behälter, als besonders vorteilhaft herausgestellt. Ein Behälter läßt sich einfach herstellen und für die Rottezeit kostengünstig lagern. Luftdurchlässige Begrenzungswände ermöglichen den für eine aerobe Verrottung erforderlichen Gasaustausch. Vorzugsweise sind alle Begrenzungswände luftdurchlässig ausgebildet. Lediglich bei sehr kleinen Behältern reicht es für einen optimalen Gasaustausch aus, nur eine oder wenige Begrenzungswände luftdurchlässig auszubilden.

Für eine optimale Verrottung muß der erforderliche Gasaustausch gewährleistet sein. Dies erfordert hinreichend große gasdurchlässige Oberflächen des Behälters. Während des Rotteprozesses entsteht infolge exothermer chemischer Prozesse Wärme, die zu einer Temperaturerhöhung der Rottemasse führt. Diese Temperaturerhöhung wirkt sich vorteilhaft auf das Wachstum und damit die Aktivität der Mikroorganismen in der Rottemasse aus. Ein zu intensiver Gasaustausch führt zu einer übermäßigen Abkühlung der Rottemasse, so daß sich der Abbauvorgang verlangsamt. Es hat sich als günstig herausgestellt, daß ein Verhältnis zwischen dem Volumen des Behälters und seiner luftdurchlässig ausgebildeten Oberfläche im Bereich zwischen (1 : 3) Meter und (1 : 8) Meter liegt. Der Rotteprozeß verläuft optimal, wenn dieses Verhältnis auf einen Bereich zwischen (1 : 4) Meter und (1 : 5) Meter eingeschränkt wird.

Die Verwendung einer Mischtrommel oder eines Extruders zur Granulierung der Rottemasse hat sich als besonders vorteilhaft erwiesen, da hierdurch eine Homogenisierung des Gemisches bei gleichzeitiger Granulierung erfolgt. Insbesondere bei der Verwendung eines Extruders werden die einzelnen Komponenten der Rottemasse durch Quetschen bzw. Zerkleinern mechanisch aufbereitet. Dies fördert den anschließenden Rotteprozeß.

Um eine noch intensivere Aufbereitung der keratinhaltigen Abfälle zu ermöglichen, ist es günstig, eine Hammermühle vorzusehen. Mit dieser werden die keratinhaltigen Abfälle zerquetscht, so daß sie eine besonders große Oberfläche aufweisen. Die Mikroorganismen können anschließend leichter in die Keratinsubstanz eindringen, so daß der Rotteprozeß homogener und damit rascher verläuft.

Anhand der folgenden Beispiele und der Zeichnung wird das erfindungsgemäße Verfahren näher erläutert.

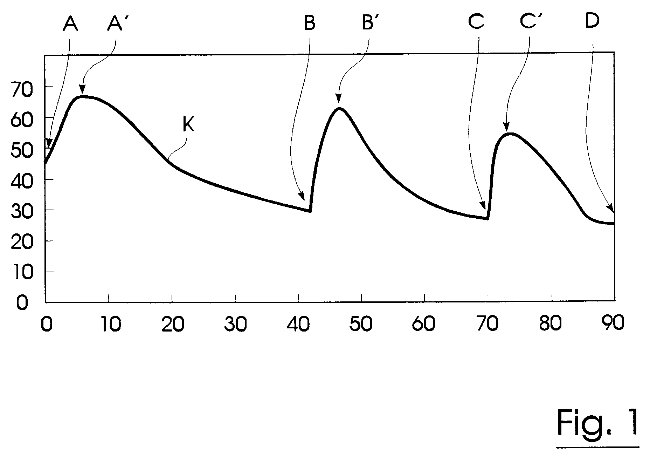

Figur 1 zeigt eine graphische Darstellung des Temperaturverlaufs einer Rottemasse während der Durchführung des Versuchs gemaß Beispiel 1. In diesem Diagramm ist horizontal die Zeit in Tagen aufgetragen. Der Nullpunkt entspricht dabei dem Versuchsbeginn. Vertikal ist die Temperatur in Grad/Celsius im Inneren der Rottemasse aufgetragen. Die Kurve K zeigt den Verlauf der Temperatur der Rottemasse als Funktion der Zeit. Zum Zeitpunkt A wurde die Rottemasse vermischt und in eine Rottebox gefüllt. Die Temperatur der Rottemasse erhöht sich im Lauf der Zeit und erreicht zum Zeitpunkt A' ein Maximum von etwa 65°C. Anschließend fällt die Temperatur ab. Zu den Zeitpunkten B und C wurde die Rottemasse umgesetzt und angefeuchtet. Dies führte zu einer erneuten Temperaturerhöhung mit Temperaturmaxima zu den Zeitpunkten B' und C'. Ein erneutes Umsetzen und Anfeuchten der Rottemasse nach dem Zeitpunkt D führte zu keiner nennenswerten Temperaturerhöhung. Der Rotteprozeß ist daher zum Zeitpunkt D abgeschlossen.

### Beispiel 1

Ein Kubikmeter loser Wollstaub wird mit einem Kubikmeter frischem Traubentresterkompost vermischt. Zur Vermeidung einer übermäßigen Staubentwicklung erfolgt dies in einem geschlossenen Mischer. Die Masse wird mit Wasser angefeuchtet und erneut gemischt. Anschließend wird die Masse locker in eine Drahtgitter-Rottebox gefüllt. Die Drahtgitter-Rottebox besitzt eine Größe von 2,2 m x 1,1 m x 0,95 m. Diese Maße haben sich als vorteilhaft erwiesen, da die gefüllte Rottebox leicht transportabel ist. Um die Aktivität der Mikroorganismen beurteilen zu können, wird üblicherweise die Entwicklung des Temperaturverlaufs der Rottemasse beobachtet. Dieser Temperaturverlauf ist aus Figur 1 ersichtlich. Zum Zeitpunkt A wurde die Rottemasse in die Rottebox gefüllt. Die Temperatur der Rottemasse steigt spontan an und erreicht nach ca. 7 Tagen einen Maximalwert von 65°C. Dies deutet auf eine heftige Aktivität der Mikroorganismen hin. Die Temperatur nimmt anschließend stetig ab, was auf eine reduzierte Bioaktivität in der Rottemasse schließen laßt. Zum Zeitpunkt B wird die Rottemasse umgesetzt und wieder angefeuchtet. Die Temperatur der Rottemasse steigt wieder spontan an, wobei sie nach ca. 5 Tagen ihr Maximum bei etwa 62°C erreicht. Anschließend fällt die Temperatur wieder ab. Dieser Vorgang wurde zum Zeitpunkt C wiederholt. Hierbei erreicht die Rottemasse nur noch eine Temperatur von etwa 50°C. Nach insgesamt 90 Tagen Rottezeit konnte auch durch erneutes Umsetzen und Anfeuchten keine merkliche Temperaturerhöhung mehr festgestellt werden. Der Kompostiervorgang ist daher abgeschlossen. Das Endprodukt ist ein angenehm riechender lockerer Kompost, der als Rasendünger eingesetzt, auch bei erneuter Befeuchtung keinen unangenehmen Geruch entwickelt. Er enthält 7,0 % Stickstoff bei einem C:N-Verhältnis von 5,3 : 1. Der Trockensubstanzgehalt beträgt 84 %, wovon 62,2 % auf organische Substanzen und 21,8 % auf Asche entfallen. Insbesondere infolge des sehr hohen Stickstoffgehalts besitzt dieser Kompost besonders günstige Düngeeigenschaften.

### Beispiel 2

300 kg Wollstaub werden zur einfacheren Lagerung eierkohlenartig verpreßt. Sie werden mit einer Hammermühle aufgemahlen und mit 600 kg frischem Traubentresterkompost vorgemischt. Das Gemisch wird mittels eines Schneckenförderers in eine rotierende Drehtrommel gefördert. Dem Gemisch werden zusätzlich 112 Liter Wasser zudosiert, so daß in der Mischung von Wollstaub und Traubentresterkompost lockere Granulate mit einer mittleren Größe zwischen 5 und 20 mm entstehen. Die Granulate werden in Rotteboxen gefördert. Die Rotteboxen besitzen die gleichen Abmessungen wie in Beispiel 1. Wiederum setzt eine spontane Aktivität von Mikroorganismen ein, was an einer deutlichen Temperaturerhöhung erkannt wird. Das Temperaturmaximum wird bereits nach 4 Tagen erreicht. Der typische Temperaturverlauf aus Beispiel 1 wurde auch in diesem Beispiel gefunden, wobei jedoch der Rotteprozeß insgesamt erheblich schneller ablief.

### Beispiel 3

10.000 Liter lockerer Wollstaub werden zusammen mit 5.000 Liter frischem, angefeuchteten Traubentresterkompost über Förderbänder in eine horizontale Zuführschnecke eines Extruders gefördert. Der Wollstaub wird mit dem Traubentresterkompost gemischt und zu stranggepreßten Granulaten verarbeitet. Die Granulate werden in würfelförmige Drahtgitter-Rotteboxen mit einer Kantenlänge von 1,5 m gefüllt. Die Aktivität der Mikroorganismen beginnt nahezu spontan. Bereits 2 Tage nach dem Einfüllen der Granulate in die Rotteboxen wird im Kern des Rottematerials eine Temperatur von 52°C gemessen. Diese Temperatur steigt in den folgenden 7 Tagen bis auf 68°C an. Sie bleibt über einen Zeitraum von 12 Tagen oberhalb von 60°C. Danach sinkt die Aktivität der Mikroorganismen im Kern des Rottematerials relativ rasch ab, da die erforderliche Feuchtigkeit verbraucht worden ist. Beim erneuten Anfeuchten und Mischen wiederholt sich der Vorgang mit geringerer Intensität aber qualitativ gleichartig. Nach ca. 115 Tagen führt die Zufuhr von Frischluft und Feuchtigkeit zu keiner weiteren nennenswerten Reaktion des kompostierten Materials. Der Kompost besitzt einen Stickstoffgehalt von 7,4 % bei einem C:N-Verhältnis von 4,5 : 1. Er enthält 85 % Trockensubstanz, wovon 61,6 % organische Substanz und 23,4 % Asche sind. Aufgrund des extrem hohen Stickstoffgehalts ist der fertige Kompost als organischer Stickstoffdünger zu bewerten.

### Beispiel 4

300 kg feuchte Borsten werden in einem geschlossenen Mischer mit 600 kg frischem Traubentresterkompost homogen vermischt. Das Gemisch verbleibt 24 Stunden lang im geschlossenen Mischer, damit der anfangs penetrante Geruch der Borsten abgeschwächt ist. Anschließend wird das Mischgut in Drahtgitter-Rotteboxen gefüllt. Die Mischung aus Borsten und frischem Traubentresterkompost wird im Abstand von jeweils 3 Wochen erneut aufgemischt und wieder in die Rottebox gefüllt. Nach 24 Wochen ist ein stabiler Fertigkompost mit 2,73 % Gesamtstickstoff entstanden. Er kann zur Bodenverbesserung und zur Düngung eingesetzt werden.

Die in vorgenannten Beispielen angegebenen Rottezeiten ergeben sich aus den erforderlichen Versuchsbedingungen. Um genaue Aussagen über den Verlauf des Rotteprozesses machen zu können, muß die Temperatur der Rottemasse über einen relativ langen Zeitraum gemessen werden. Dabei nehmen die Zeiten hoher biologischer Aktivität der Mikroorganismen einen verhältnismäßig geringen Anteil der gesamten Rottezeit ein. Bei industrieller Anwendung des erfindungsgemäßen Verfahrens kann daher die Rottezeit beispielsweise durch häufigeres Umsetzen und Anfeuchten der Rottemasse erheblich reduziert werden.

## Patentansprüche

1. Verfahren zur Herstellung eines Komposts durch Vermischen keratinhaltiger Abfälle mit Obsttrester und/oder Obsttresterkompost, Versetzen mit Wasser und/oder einem Granulierhilfsmittel und anschließender aerober Kompostierung.

2. Verfahren nach Anspruch 1, dadurch gekennzeichnet, daß als Obsttrester und/oder Obsttresterkompost wenigstens teilweise Traubentrester und/oder Traubentresterkompost eingesetzt werden.

3. Verfahren nach Anspruch 1 oder 2, dadurch gekennzeichnet, daß der Kohlenstoffträger zu den keratinhaltigen Abfällen in einem Gewichtsverhältnis im Bereich zwischen 3 : 1 und 1 : 3 liegt.

4. Verfahren nach Anspruch 1, dadurch gekennzeichnet, daß das Gemisch vor der Kompostierung granuliert wird.

5. Verfahren nach Anspruch 1 oder 4, dadurch gekennzeichnet, daß als Granulierhilfsmittel Melasse, Vinasse, Sago, Leim, Stärke, Methylzellulose und/oder Ligninsulfonate eingesetzt werden.

6. Verfahren nach Anspruch 1, dadurch gekennzeichnet, daß die keratinhaltigen Abfälle vor dem Vermischen mit dem Obsttrester und/oder dem Obsttresterkompost durch Brechen, Quetschen und/oder Mahlen zerkleinert werden.
